# EUROPÄISCHE PATENTSCHRIFT

(11) **EP 3 079 942 B1**
(45) Veröffentlichungstag und Bekanntmachung des Hinweises auf die Patenterteilung: **02.08.2023**
(21) Anmeldenummer: 14809334.7
(22) Anmeldetag: 02.12.2014
(51) Int. Cl.: B60L 58/10, H02J 7/14

(54) **BATTERIESYSTEM**
BATTERY SYSTEM
SYSTÈME DE BATTERIE

(30) Priorität: 09.12.2013 DE 102013225250
(43) Veröffentlichungstag der Anmeldung: 19.10.2016
(73) Patentinhaber: Robert Bosch GmbH, 70442 Stuttgart (DE)
(72) Erfinder: STROBEL, Jens, 71691 Freiberg am Neckar (DE); HENRICI, Fabian, 70195 Stuttgart (DE)
(86) Internationale Anmeldenummer: PCT/EP2014/076172
(87) Internationale Veröffentlichungsnummer: WO 2015/086369

(56) Entgegenhaltungen:
- WO-A1-2012/171919
- DE-A1- 19 814 366
- DE-A1-102011 087 028
- DE-A1-102012 202 754
- DE-A1-102012 208 454
- DE-A1-102012 208 820
- US-A- 5 495 503
- US-A1- 2006 132 089
- US-A1- 2010 123 430

## Beschreibung

### Stand der Technik

In elektrisch angetriebenen Kraftfahrzeugen, insbesondere Elektrofahrzeugen und Hybridfahrzeugen, werden Sekundärbatterien eingesetzt, um mit ihnen elektrische Antriebseinrichtungen der Kraftfahrzeuge mit elektrischer Energie zu versorgen. Entsprechende Sekundärbatterien weisen in der Regel elektrisch miteinander zu einem Batteriestrang verschaltete Batteriemodule auf, welche wiederum mehrere elektrisch miteinander verschaltete Batteriezellen aufweisen können. Die Batteriezellen einer Sekundärbatterie können beispielsweise als Lithium-lonen-Batteriezellen ausgebildet sein.

Die Batteriemodule bzw. Batteriezellen sind zur Erzeugung von elektrischer Energie gewünschter Größenordnung über Leistungsschalttransistoren dynamisch mit einer Hochstromleitung der Sekundärbatterie verbindbar bzw. von der Hochstromleitung trennbar. Ein von der Hochstromleitung getrenntes Batteriemodul bzw. eine von der Hochstromleitung getrennte Batteriezelle wird üblicherweise mittels eines Leistungsüberbrückungstransistors überbrückt. Diese Leistungselektronik kann einen Teil einer Batteriezelle bilden, welche im Übrigen herkömmlich eine eigene Elektronikeinheit und ein galvanisches Element aufweist.

Das Dokument DE 10 2012 208 454 A1 offenbart eine Konditionierungsvorrichtung und Verfahren zum Konditionieren eines Datenkanals einer Zelle eines elektrischen Energiespeichers.

Das Dokument WO 2012/171919 A1 offenbart ein Batteriezellensystem mit vereinfachter Überwachung.

Das Dokument DE 10 2011 087 028 A1 offenbart Batteriemodulstrang für den Antrieb eines Gleichstrommotors.

Das Dokument US 2010/123430 A1 offenbart eine kontaktlose Energieübertragungsvorrichtung.

### Offenbarung der Erfindung

Gegenstand der Erfindung ist ein Batteriesystem, insbesondere für ein elektrisch antreibbares Kraftfahrzeug, aufweisend wenigstens eine Batterieuntereinheit und wenigstens eine Hochstromleitung, wobei die Batterieuntereinheit aufweist
- wenigstens ein galvanisches Element,
- wenigstens einen Leistungsschalttransistor, der in Reihe zu dem galvanischen Element geschaltet ist und über den das galvanische Element elektrisch leitend mit der Hochstromleitung verbindbar ist,
- wenigstens einen Leistungsüberbrückungstransistor, der parallel zu dem Leistungsschalttransistor und zu dem galvanischen Element geschaltet ist, und
- wenigstens eine elektronische Einrichtung, die zum Erfassen von wenigstens einem Betriebsparameter der Batterieuntereinheit eingerichtet und kommunikationstechnisch mit dem Leistungsschalttransistor und/oder dem Leistungsüberbrückungstransistor verbunden ist,
- wobei die elektronische Einrichtung eingerichtet ist, ein dem Betriebsparameter zugeordnetes Datensignal zu erzeugen, indem sie den Leistungsschalttransistor und/oder den Leistungsüberbrückungstransistor derart elektrisch ansteuert, dass der elektrische Widerstand des Leistungsschalttransistors und/oder des Leistungsüberbrückungstransistors in wenigstens einem vorgebbaren Zeitintervall moduliert wird, um die Höhe des in der Hochstromleitung fließenden elektrischen Stroms zu modulieren und wobei die elektronische Einrichtung eingerichtet ist, ein dem Betriebsparameter zugeordnetes Datensignal zu erzeugen, indem sie bei geschlossenem Leistungsschalttransistor und geöffnetem Leistungsüberbrückungstransistor den Leistungsüberbrückungstransistor und/oder bei geschlossenem Leistungsüberbrückungstransistor und geöffnetem Leistungsschalttransistor den Leistungsschalttransistor derart elektrisch ansteuert, dass durch den Leistungsüberbrückungstransistor bzw. den Leistungsschalttransistor in wenigstens einem vorgebbaren Zeitintervall ein Teil eines in der Hochstromleitung fließenden elektrischen Stroms fließt.

Durch die erfindungsgemäße elektrische Ansteuerung des Leistungsüberbrückungstransistors bzw. des Leistungsschalttransistors wird der elektrische Widerstand des Leistungsschalttransistors und/oder des Leistungsüberbrückungstransistors in wenigstens einem vorgebbaren Zeitintervall moduliert, wodurch die Stärke eines in der Hochstromleitung fließenden elektrischen Stroms moduliert wird. Insbesondere wird hierdurch die Stärke eines in der Hochstromleitung fließenden elektrischen Stroms über einen ohne diese Ansteuerung zu erwartenden Stromwert angehoben oder abgesenkt. Allgemein beschrieben wird der elektrische Widerstand des Leistungsschalttransistors und/oder des Leistungsüberbrückungstransistors mit dem Ziel moduliert, auf der Hochstromleitung der Batterie eine detektierbare Stromänderung zu erzeugen. Als Folge wird auch die elektrische Spannung, welche über der Hochstromleitung abgreifbar ist, sich ändern. Eine oder beide Größen können zum Empfangen des Datensignals ausgewertet werden. Hierdurch kann ein bestimmter Betriebsparameter der Batterieuntereinheit signalisiert und in die Hochstromleitung eingespeist werden, um beispielsweise von einer übergeordneten elektronischen Auswertungs- und Steuerungseinrichtung ausgewertet werden zu können. Sollen komplexere Datensignale erzeugt und in die Hochstromleitung eingespeist werden, kann der Leistungsüberbrückungstransistor bzw. der Leistungsschalttransistor in mehreren aufeinander folgenden, vorgebbaren Zeitintervallen, beispielsweise periodisch, entsprechend elektrisch angesteuert werden. Die Einspeisung des durch den Leistungsüberbrückungstransistor bzw. der Leistungsschalttransistor fließenden elektrischen Stroms in die Hochstromleitung ist mit einer Lastmodulation verbunden.

Ein elektrisch antreibbares Kraftfahrzeug kann im Rahmen der Erfindung beispielsweise ein Hybridfahrzeug, ein Plug-in-Hybridfahrzeug oder ein Elektrofahrzeug sein.

Das Batteriesystem kann im Rahmen der Erfindung zwei oder mehrere galvanische Elemente aufweisen. Auch eine Batterieuntereinheit kann zwei oder mehrere galvanische Elemente aufweisen. Alternativ kann eine Batterieuntereinheit ein einzelnes galvanisches Element aufweisen und somit als herkömmliche Batteriezelle ausgebildet sein.

Es kann jeder Batterieuntereinheit eine eigene elektronische Einrichtung zugeordnet sein, die zum Erfassen von wenigstens einem Betriebsparameter der jeweiligen Batterieuntereinheit eingerichtet ist. Die Batterieuntereinheiten können sich in ihrer Zusammensetzung, beispielsweise in der Anzahl ihrer galvanischen Elemente, voneinander unterscheiden. Vorzugsweise ist jede Batterieuntereinheit über einen eigenen Leistungsschalttransistor, der in Reihe zu dem jeweiligen galvanischen Element geschaltet ist, elektrisch leitend mit der Hochstromleitung verbindbar. Bevorzugt ist jeder Batterieuntereinheit ein eigener Leistungsüberbrückungstransistor zugeordnet, der parallel zu dem jeweiligen Leistungsschalttransistor und zu dem jeweiligen galvanischen Element geschaltet ist.

Die elektronische Einrichtung kann durch eine herkömmlich vorhandene Steuerungselektronik einer Batteriezelle oder durch eine separate Elektronik ausgebildet sein. Der von einer elektronischen Einrichtung erfassbare Betriebsparameter der Batterieuntereinheit kann mittels eines Sensors erfasst werden. Als Betriebsparameter kommt beispielsweise die Temperatur einer Batterieuntereinheit, eine von dem wenigstens einen galvanischen Element erzeugte elektrische Spannung oder dergleichen in Betracht. Das von einer elektronischen Einrichtung erzeugte Datensignal kann auch Informationen über zwei oder mehrere verschiedene Betriebsparameter der jeweiligen Batterieuntereinheit enthalten.

Gemäß einer vorteilhaften Ausgestaltung steuert die elektronische Einrichtung den Leistungsüberbrückungstransistor bzw. den Leistungsschalttransistor derart elektrisch an, dass in dem Zeitintervall eine Gate-Spannung des jeweiligen Leistungstransistors um ein vorgebbares Maß abgesenkt oder angehoben wird. Hierdurch wird der Leistungsüberbrückungstransistor bzw. der Leistungsschalttransistor geringfügig geschlossen oder geöffnet, also sein elektrischer Widerstand moduliert, damit in wenigstens einem vorgebbaren Zeitintervall ein Teil des in der Hochstromleitung fließenden elektrischen Stroms durch den Leistungsüberbrückungstransistor bzw. den Leistungsschalttransistor fließen kann bzw. die Stärke des fließenden elektrischen Stromes moduliert werden kann.

Nach einer weiteren vorteilhaften Ausgestaltung ist die elektronische Einrichtung eingerichtet, ein von einer weiteren Batterieuntereinheit zugeordneten elektronischen Einrichtung erzeugtes Datensignal zu empfangen und auszuwerten. Dies ermöglicht eine Kommunikation zwischen den Batterieuntereinheiten untereinander. Es können auch alle elektronischen Einrichtungen einer Batterie entsprechend ausgestaltet sein.

Gemäß einer weiteren vorteilhaften Ausgestaltung weist das Batteriesystem wenigstens eine zentrale elektronische Auswertungs- und Steuerungseinrichtung auf, welche elektrisch leitend mit der Hochstromleitung und/oder mit einem Stromsensor, welcher den durch die Hochstromleitung fließenden elektrischen Strom misst, verbunden und die eingerichtet ist, das Datensignal zu empfangen und auszuwerten. Die zentrale elektronische Auswertungs- und Steuerungseinrichtung kann den Batterieuntereinheiten übergeordnet sein. Des Weiteren kann die zentrale elektronische Auswertungs- und Steuerungseinrichtung durch eine herkömmliche Batteriesteuereinheit (sogenannte "Battery Control Unit"; BCU) ausgebildet sein. Die zentrale elektronische Auswertungs- und Steuerungseinrichtung kann den in der Hochstromleitung der Batterie fließenden elektrischen Strom messen, um ein Datensignal von einer elektronischen Einrichtung empfangen zu können. Alternativ kann mittels der zentralen elektronischen Auswertungs- und Steuerungseinrichtung die sich an den Enden der Hochstromleitung, also den Ausgängen der Batterie, einstellende elektrische Spannung bzw. Spannungsmodulation gemessen werden, um ein Datensignal zu empfangen.

Eine weitere vorteilhafte Ausgestaltung sieht vor, dass die zentrale elektronische Auswertungs- und Steuerungseinrichtung eingerichtet ist, ein Datensignal zu erzeugen und über die Hochstromleitung an wenigstens eine elektronische Einrichtung zu senden. Hierdurch ist eine bidirektionale Kommunikation zwischen der zentralen elektronischen Auswertungs- und Steuerungseinrichtung und den elektronischen Einrichtungen möglich.

Gegenstand eines Beispiels, um die Erfindung zu verstehen, ist auch ein Verfahren zum Erzeugen eines wenigstens einem Betriebsparameter einer Batterieuntereinheit einer Batterie, insbesondere einer Batterie eines elektrisch antreibbaren Kraftfahrzeugs, zugeordneten Datensignals, wobei die Batterieuntereinheit wenigstens ein galvanisches Element und zumindest einen Leistungsschalttransistor aufweist, wobei das galvanische Element über den Leistungsschalttransistor elektrisch leitend mit einer Hochstromleitung der Batterie verbindbar ist, dadurch gekennzeichnet, dass das Datensignal erzeugt wird, indem bei geschlossenem Leistungsschalttransistor und geöffnetem Leistungsüberbrückungstransistor den Leistungsüberbrückungstransistor und bei geschlossenem Leistungsüberbrückungstransistor und geöffnetem Leistungsschalttransistor den Leistungsschalttransistor derart elektrisch angesteuert wird, dass wenigstens ein tatsächlicher Schaltzeitpunkt des Leistungsschalttransistors um ein vorgebbares Maß von einem vorgegebenen Schaltmuster abweicht.

Mit diesem Verfahren sind die oben mit Bezug auf das entsprechend ausgebildete Batteriesystem verbundenen Vorteile entsprechend verbunden.

Gegenstand eines Beispiels, um die Erfindung zu verstehen, ist ferner eine Verwendung eines eine Batterieuntereinheit einer Batterie, insbesondere einer Batterie eines elektrisch antreibbaren Kraftfahrzeugs, mit einer Hochstromleitung der Batterie verbindenden Leistungstransistors für ein erfindungsgemäßes Batteriesystem zum Erzeugen eines wenigstens einem Betriebsparameter der Batterieuntereinheit zugeordneten Datensignals und zum Einleiten des Datensignals in die Hochstromleitung. Der Leistungstransistor kann als Leistungsschalttransistor oder als Leistungsüberbrückungstransistor ausgebildet sein.

Mit der Erfindung wird somit ein Kommunikationsverfahren zum Austausch von Informationen zwischen Sensoren und Steuergeräten innerhalb eines Batteriesystems, insbesondere für Lithium-Ionen-Batteriesysteme, von elektrisch antreibbaren Kraftfahrzeugen möglich.

Im Folgenden wird die Erfindung unter Bezugnahme auf die anliegenden Figuren anhand von bevorzugten Ausführungsbeispielen exemplarisch erläutert, wobei die nachfolgend dargestellten Merkmale sowohl jeweils für sich genommen als auch in verschiedener Kombination miteinander einen Aspekt der Erfindung darstellen können. Es zeigen
- Figur 1:: ein schematisches Schaltbild eines Ausführungsbeispiels für ein erfindungsgemäßes Batteriesystem, und
- Figur 2:: eine schematische Darstellung einer elektronischen Ansteuerung eines Leistungstransistors gemäß einem Ausführungsbeispiel für ein erfindungsgemäßes Batteriesystem.

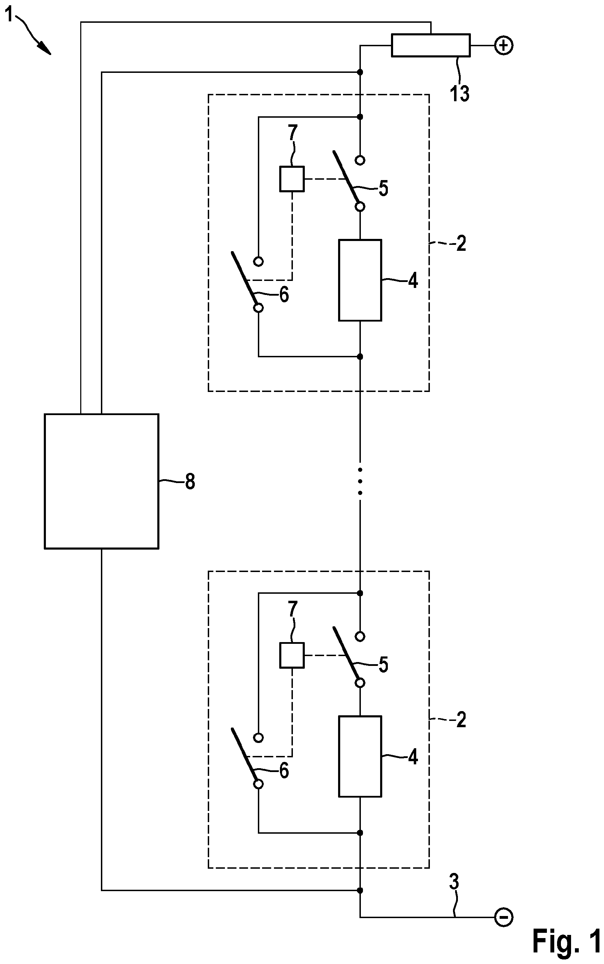

Figur 1 zeigt ein schematisches Schaltbild eines Ausführungsbeispiels für ein erfindungsgemäßes Batteriesystem 1. Das Batteriesystem 1 umfasst mehrere in Reihe geschaltete, als Batteriezellen ausgebildete Batterieuntereinheiten 2 und eine Hochstromleitung 3.

Jede Batterieuntereinheit 2 weist ein galvanisches Element 4, eine aus einem Leistungsschalttransistor 5 und einem Leistungsüberbrückungstransistor 6 gebildete Leistungselektronik sowie eine elektronische Einrichtung 7 auf. Die Leistungsschalttransistoren 5 sind in Reihe zu den jeweiligen galvanischen Elementen 4 geschaltet. Die galvanischen Elemente 4 sind über den jeweiligen Leistungsschalttransistor 5 mit der Hochstromleitung 3 verbindbar. Die Leistungsüberbrückungstransistoren 6 sind parallel zu dem jeweiligen Leistungsschalttransistor 5 und zu dem jeweiligen galvanischen Element 4 geschaltet. Die elektronischen Einrichtungen 7 sind zum Erfassen von wenigstens einem Betriebsparameter der jeweiligen Batterieuntereinheit 2 eingerichtet. Die Leistungsschalttransistoren 5 und die Leistungsüberbrückungstransistoren 6 befinden sich in ihren jeweiligen Offenstellungen.

Das Batteriesystem 1 umfasst des Weiteren eine zentrale elektronische Auswertungs- und Steuerungseinrichtung 8, welche elektrisch leitend mit der Hochstromleitung 3 verbunden ist. Hierdurch kann die in der Hochstromleitung 3 vorliegende elektrische Spannung erfasst werden. Die zentrale elektronische Auswertungs- und Steuerungseinrichtung 8 ist zudem über einen Stromsensor 13 mit der Hochstromleitung 3 verbunden, um den in der Hochstromleitung 3 fließenden elektrischen Strom erfassen zu können.

Jede elektronische Einrichtung 7 ist eingerichtet, ein dem Betriebsparameter zugeordnetes Datensignal zu erzeugen, indem sie den Leistungsschalttransistor 5 und/oder den Leistungsüberbrückungstransistor 6 derart elektrisch ansteuert, dass der elektrische Widerstand des Leistungsschalttransistors 5 und/oder des Leistungsüberbrückungstransistors 6 in wenigstens einem vorgebbaren Zeitintervall moduliert wird. Hierzu kann jede elektronische Einrichtung 7 eingerichtet sein, bei geschlossenem Leistungsschalttransistor 5 und geöffnetem Leistungsüberbrückungstransistor 6 den Leistungsüberbrückungstransistor 6 und bei geschlossenem Leistungsüberbrückungstransistor 6 und geöffnetem Leistungsschalttransistor 5 den Leistungsschalttransistor 5 derart elektrisch anzusteuern, dass durch den Leistungsüberbrückungstransistor 6 bzw. den Leistungsschalttransistor 5 in wenigstens einem vorgebbaren Zeitintervall ein Teil eines in der Hochstromleitung 3 fließenden elektrischen Stroms fließt. Hierzu steuert jede elektronische Einrichtung 7 den jeweiligen Leistungsüberbrückungstransistor 6 bzw. den jeweiligen Leistungsschalttransistor 5 derart elektrisch an, dass in dem Zeitintervall eine Gate-Spannung des jeweiligen Leistungstransistors 6 bzw. 5 um ein vorgebbares Maß abgesenkt oder angehoben wird.

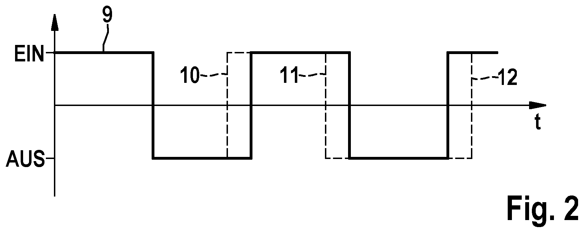

Alternativ kann jede elektronische Einrichtung 7 eingerichtet sein, ein dem Betriebsparameter zugeordnetes Datensignal zu erzeugen, indem sie bei geöffnetem Leistungsüberbrückungstransistor 6 den Leistungsschalttransistor 5 derart elektrisch ansteuert, dass wenigstens ein tatsächlicher Schaltzeitpunkt des Leistungsschalttransistors 5 um ein vorgebbares Maß von einem vorgegebenen Schaltmuster abweicht. Dies wird in Figur 2 verdeutlicht.

Jede elektronische Einrichtung 7 ist zudem eingerichtet, ein von einer weiteren Batterieuntereinheit 2 zugeordneten elektronischen Einrichtung 7 erzeugtes Datensignal zu empfangen und auszuwerten. Auch die zentrale elektronische Auswertungs- und Steuerungseinrichtung 8 ist eingerichtet, das Datensignal zu empfangen und auszuwerten. Ferner ist die zentrale elektronische Auswertungs- und Steuerungseinrichtung 8 eingerichtet, selbst ein Datensignal zu erzeugen und über die Hochstromleitung 3 an wenigstens eine elektronische Einrichtung 7 zu senden.

Figur 2 zeigt eine schematische Darstellung einer elektronischen Ansteuerung eines Leistungsschalttransistors 5 gemäß einem Ausführungsbeispiel für ein erfindungsgemäßes Batteriesystem 1. Die durchgezogene Linie 9 stellt ein vorgebebenes Schaltmuster dar. In gestrichelten Linien 10, 11 und 12 sind tatsächliche Schaltzeitpunkte dargestellt, welche von vorgegebenen Schaltzeitpunkten des vorgegebenen Schaltmusters um ein vorgebbares Maß abweichen. Die tatsächlichen Schaltzeitpunkte 10 und 11 sind den nach dem Schaltmuster erwarteten Schaltzeitpunkten vorgelagert, während der tatsächliche Schaltzeitpunkt 12 dem nach dem Schaltmuster erwarteten Schaltzeitpunkt nachgelagert ist. Durch diese Abweichungen der tatsächlichen Schaltzeitpunkte von erwarteten Schaltzeitpunkten können die binären Einheiten 0 und 1 kodiert werden.

## Patentansprüche

1. Batteriesystem (1), insbesondere für ein elektrisch antreibbares Kraftfahrzeug, aufweisend wenigstens eine Batterieuntereinheit (2) und wenigstens eine Hochstromleitung (3), wobei die Batterieuntereinheit (2) aufweist
- wenigstens ein galvanisches Element (4),
- wenigstens einen Leistungsschalttransistor (5), der in Reihe zu dem galvanischen Element (4) geschaltet ist und über den das galvanische Element (4) elektrisch leitend mit der Hochstromleitung (3) verbindbar ist,
- wenigstens einen Leistungsüberbrückungstransistor (6), der parallel zu dem Leistungsschalttransistor (5) und zu dem galvanischen Element (4) geschaltet ist, und
- wenigstens eine elektronische Einrichtung (7), die zum Erfassen von wenigstens einem Betriebsparameter der Batterieuntereinheit (2) eingerichtet und kommunikationstechnisch mit dem Leistungsschalttransistor (5) und/oder dem Leistungsüberbrückungstransistor (6) verbunden ist,
- wobei die elektronische Einrichtung (7) eingerichtet ist, ein dem Betriebsparameter zugeordnetes Datensignal zu erzeugen, indem sie den Leistungsschalttransistor (5) und/oder den Leistungsüberbrückungstransistor (6) derart elektrisch ansteuert, dass der elektrische Widerstand des Leistungsschalttransistors (5) und/oder des Leistungsüberbrückungstransistors (6) in wenigstens einem vorgebbaren Zeitintervall moduliert wird, um die Höhe des in der Hochstromleitung (3) fließenden elektrischen Stroms zu modulieren und wobei die elektronische Einrichtung (7) eingerichtet ist, ein dem Betriebsparameter zugeordnetes Datensignal zu erzeugen, indem sie bei geschlossenem Leistungsschalttransistor (5) und geöffnetem Leistungsüberbrückungstransistor (6) den Leistungsüberbrückungstransistor (6) und bei geschlossenem Leistungsüberbrückungstransistor (6) und geöffnetem Leistungsschalttransistor (5) den Leistungsschalttransistor (5) derart elektrisch ansteuert, dass durch den Leistungsüberbrückungstransistor (6) bzw. den Leistungsschalttransistor (5) in wenigstens einem vorgebbaren Zeitintervall ein Teil eines in der Hochstromleitung (3) fließenden elektrischen Stroms fließt.

2. Batteriesystem (1) nach Anspruch 1, **dadurch gekennzeichnet, dass** die elektronische Einrichtung (7) den Leistungsüberbrückungstransistor (6) bzw. den Leistungsschalttransistor (5) derart elektrisch ansteuert, dass in dem Zeitintervall eine Gate-Spannung des jeweiligen Leistungstransistors (5, 6) um ein vorgebbares Maß abgesenkt oder angehoben wird.

3. Batteriesystem (1) nach einem der Ansprüche 1 bis 3, **dadurch gekennzeichnet, dass** die elektronische Einrichtung (7) eingerichtet ist, ein von einer weiteren Batterieuntereinheit (2) zugeordneten elektronischen Einrichtung (7) erzeugtes Datensignal zu empfangen und auszuwerten.

4. Batteriesystem (1) nach einem der Ansprüche 1 bis 4, **gekennzeichnet durch** wenigstens eine zentrale elektronische Auswertungs- und Steuerungseinrichtung (8), welche elektrisch leitend mit der Hochstromleitung (3) und/oder mit einem Stromsensor, welcher den durch die Hochstromleitung (3) fließenden elektrischen Strom misst, verbunden und die eingerichtet ist, das Datensignal zu empfangen und auszuwerten.

5. Batteriesystem (1) nach Anspruch 5, **dadurch gekennzeichnet, dass** die zentrale elektronische Auswertungs- und Steuerungseinrichtung (8) eingerichtet ist, ein Datensignal zu erzeugen und über die Hochstromleitung (3) an wenigstens eine elektronische Einrichtung (7) zu senden.

## Claims

1. Battery system (1), in particular for an electrically driveable motor vehicle, having at least one battery sub-unit (2) and at least one high-current line (3), wherein the battery sub-unit (2) has
- at least one galvanic element (4),
- at least one power switching transistor (5), which is connected in series with the galvanic element (4), and via which the galvanic element (4) is able to be electrically conductively connected to the high-current line (3),
- at least one power bypass transistor (6) that is connected in parallel with the power switching transistor (5) and with the galvanic element (4), and
- at least one electronic device (7) that is configured for acquiring at least one operating parameter of the battery sub-unit (2) and is connected to the power switching transistor (5) and/or the power bypass transistor (6) using communication technology,
- wherein the electronic device (7) is configured to generate a data signal assigned to the operating parameter, in that it electrically activates the power switching transistor (5) and/or the power bypass transistor (6) in such a manner that the electrical resistance of the power switching transistor (5) and/or the power bypass transistor (6) is modulated in at least one predeterminable time interval in order to modulate the level of the electric current flowing in the high-current line (3), and wherein the electronic device (7) is configured to generate a data signal assigned to the operating parameter in that it electrically activates the power bypass transistor (6), with closed power switching transistor (5) and open power bypass transistor (6), and the power switching transistor (5), with closed power bypass transistor (6) and open power switching transistor (5), in such a manner that some of an electric current flowing in the high-current line (3) flows through the power bypass transistor (6) or the power switching transistor (5), respectively, in at least one predeterminable time interval.

2. Battery system (1) according to Claim 1, **characterized in that** the electronic device (7) electrically activates the power bypass transistor (6) or the power switching transistor (5), respectively, in such a manner that a gate voltage of the respective power transistor (5, 6) is lowered or raised by a predeterminable amount in the time interval.

3. Battery system (1) according to one of Claims 1 to 2, **characterized in that** the electronic device (7) is configured to receive and evaluate a data signal generated by an electronic device (7) assigned to a further battery sub-unit (2).

4. Battery system (1) according to one of Claims 1 to 3, **characterized by** at least one central electronic evaluation and control device (8), which is electrically conductively connected to the high-current line (3) and/or to a current sensor that measures the electric current flowing through the high-current line (3), and which is configured to receive and evaluate the data signal.

5. Battery system (1) according to Claim 4, **characterized in that** the central electronic evaluation and control device (8) is configured to generate a data signal and to send it to at least one electronic device (7) via the high-current line (3).

## Revendications

1. Système de batterie (1), en particulier pour un véhicule automobile à propulsion électrique, présentant au moins un sous-ensemble de batterie (2) et au moins une ligne à courant fort (3), le sous-ensemble de batterie (2) présentant
- au moins un élément galvanique (4),
- au moins un transistor de commutation de puissance (5) qui est connecté en série avec l'élément galvanique (4) et par lequel l'élément galvanique (4) peut être relié de manière électriquement conductrice à la ligne à courant fort (3),
- au moins un transistor de pontage de puissance (6) qui est connecté en parallèle au transistor de commutation de puissance (5) et à l'élément galvanique (4), et
- au moins un dispositif électronique (7) qui est conçu pour détecter au moins un paramètre de fonctionnement du sous-ensemble de batterie (2) et est relié en technique de communication au transistor de commutation de puissance (5) et/ou au transistor de pontage de puissance (6),
- dans lequel le dispositif électronique (7) est conçu pour générer un signal de données associé au paramètre de fonctionnement en pilotant électriquement le transistor de commutation de puissance (5) et/ou le transistor de pontage de puissance (6) de telle sorte que la résistance électrique du transistor de commutation de puissance (5) et/ou du transistor de pontage de puissance (6) est modulée dans au moins un intervalle de temps prédéfinissable afin de moduler le niveau du courant électrique circulant dans la ligne à courant fort (3), et dans lequel le dispositif électronique (7) est conçu pour générer un signal de données associé au paramètre de fonctionnement en pilotant électriquement le transistor de pontage de puissance (6) lorsque le transistor de commutation de puissance (5) est fermé et le transistor de pontage de puissance (6) est ouvert, et en pilotant électriquement le transistor de commutation de puissance (5) lorsque le transistor de pontage de puissance (6) est fermé et le transistor de commutation de puissance (5) est fermé de telle sorte qu'une partie d'un courant électrique circulant dans la ligne à courant fort (3) circule par le transistor de pontage de puissance (6) ou le transistor de commutation de puissance (5) dans au moins un intervalle de temps prédéfinissable.

2. Système de batterie (1) selon la revendication 1, **caractérisé en ce que** le dispositif électronique (7) pilote électriquement le transistor de pontage de puissance (6) ou le transistor de commutation de puissance (5) de telle sorte que dans l'intervalle de temps, une tension de grille du transistor de puissance (5, 6) respectif est abaissée ou relevée d'une mesure prédéfinissable.

3. Système de batterie (1) selon l'une quelconque des revendications 1 à 2, **caractérisé en ce que** le dispositif électronique (7) est conçu pour recevoir et évaluer un signal de données généré par un dispositif électronique (7) associé à un autre sous-ensemble de batterie (2).

4. Système de batterie (1) selon l'une quelconque des revendications 1 à 3, **caractérisé par** au moins un dispositif d'évaluation et de commande électronique central (8) qui est relié de manière électriquement conductrice à la ligne à courant fort (3) et/ou à un capteur de courant qui mesure le courant électrique circulant par la ligne à courant fort (3), et ledit dispositif est conçu pour recevoir et évaluer le signal de données.

5. Système de batterie (1) selon la revendication 4, **caractérisé en ce que** le dispositif d'évaluation et de commande électronique (8) est conçu pour générer un signal de données et pour l'envoyer par la ligne à courant fort (3) audit au moins un dispositif électronique (7).
